Europäisches Patentamt

European Patent Office

Office européen des brevets

(11) Veröffentlichungsnummer : **0 106 056**
**B1**

# (12) EUROPÄISCHE PATENTSCHRIFT

(45) Veröffentlichungstag der Patentschrift :
15.03.89

(51) Int. Cl.⁴ : **B 23 Q 7/00**, B 21 D 43/18

(21) Anmeldenummer : **83107945.4**

(22) Anmeldetag : **11.08.83**

(54) **Vorrichtung insbesondere zum Be- und Entladen einer Bearbeitungsmaschine für Blech.**

(30) Priorität : **15.09.82 DE 3234216**

(43) Veröffentlichungstag der Anmeldung :
**25.04.84 Patentblatt 84/17**

(45) Bekanntmachung des Hinweises auf die Patenterteilung : **15.03.89 Patentblatt 89/11**

(84) Benannte Vertragsstaaten :
**CH FR GB LI**

(56) Entgegenhaltungen :
**AT--B-- 261 363**
**DE--A-- 1 506 935**
**DE--A-- 2 346 319**
**DE--A-- 2 840 625**

(73) Patentinhaber : **Trumpf GmbH & Co**
**Postfach 1320 Johann-Maus-Strasse 2**
**D-7257 Ditzingen (DE)**

(72) Erfinder : **Klingel, Hans, Dipl.-Ing.**
**Teckstrasse 91**
**D-7141 Möglingen (DE)**
Erfinder : **Brüggemann, Wolf, Dipl.-Ing.**
**Schillerstrasse 14**
**D-7261 Ostelsheim (DE)**
Erfinder : **Bytow, Peter**
**Mozartstrasse 2**
**D-7261 Simmozheim (DE)**

(74) Vertreter : **Schmid, Berthold et al**
**Patentanwälte Dipl.-Ing. B. Schmid Dr. Ing. G. Birn**
**Dipl.-Phys. H. Quarder Falbenhennenstrasse 17**
**D-7000 Stuttgart 1 (DE)**

EP 0 106 056 B1

**Beschreibung**

Die Erfindung bezieht sich auf eine Vorrichtung zum Heben von Blechen, insbesondere zum Be- und Entladen einer einen Werkstückvorschub in wenigstens einer Koordinatenrichtung aufweisenden Bearbeitungsmaschine für das Blech, insbesondere Werkzeugmaschine, mit einem Hubglied mit mindestens einer Reihe von Werkstückhalterungen, vorzugsweise Saugern, wobei die Grundeinstellung der Werkstückhalterungen gegenüber dem Hubglied einzeln veränderbar ist, indem die Werkstückhalterungen an zumindest einer Schiene längsverschiebbar gelagert sind und wobei ferner das Hubglied gegenüber einem Schlitten heb- und senkbar und der Schlitten gegenüber einem Gestell in Verstellrichtung der Werkstückhalterungen fahrbar ist. Eine solche Vorrichtung ist durch die DE-A-15 06 935 bekannt geworden. Jede Werkstückhalterung dieser Vorrichtung benötigt einen separaten Verstellzylinder. Bei ca. 30 Verstellzylindern entsteht ein erheblicher Aufwand nicht nur aufgrund der großen Verstellzylinderzahl, sondern weil jeder Verstellzylinder über eine Leitung mit dem Hydrauliksystem verbunden werden muß. Letzteres ist infolgedessen sehr aufwendig und damit auch störanfällig. Vor allen Dingen verteuert diese Ausbildung die ganze Vorrichtung derart, daß ihr eher eine theoretische Bedeutung zukommt.

Die Aufgabe der Erfindung besteht infolgedessen darin, eine Vorrichtung der eingangs beschriebenen Art so weiterzubilden, daß sie, jeweils bezogen auf gleichgroße Bleche, unter Beibehaltung ihrer flexiblen Anpassung an das jeweilige Blech wesentlich einfacher ausgebildet werden kann.

Zur Lösung dieser Aufgabe wird erfindungsgemäß vorgeschlagen, daß die Vorrichtung nach dem Oberbegriff des Anspruchs 1 dadurch gekennzeichnet ist, daß die Werkstückhalterungen zur Veränderung ihrer Grundeinstellung mit einem in Richtung der Schiene bewegbaren Stab oder Blech verbindbar sind, wobei der Stab oder das Blech mit der oder den Werkstückhalterungen gegenüber der Schiene oder der Schlitten gegenüber dem Stab oder Blech mit der oder den Werkstückhalterungen verschiebbar ist. Während bei der vorbekannten Vorrichtung jede Werkstückhalterung nur um den Betrag verschoben werden kann, der durch den maximalen Arbeitshub ihres Verstellzylinders vorgegeben ist, läßt sich jede Werkstückhalterung der erfindungsgemäßen Vorrichtung um einen demgegenüber größeren Betrag verschieben, so daß man insgesamt mit einer wesentlich kleineren Anzahl von Werkstückhalterungen trotzdem die ganze, der Blechgröße entsprechende Fläche erreichen kann.

Gemäß der ersten Betriebsvariante kann man die Werkstückhalterung entweder mit dem in Richtung der Schiene bewegbaren Stab oder auch einem Blech verbinden, wobei es sich durchaus auch um das zu bearbeitende Blech handeln kann. Der Stab oder das Blech wird daraufhin mit der angekuppelten Werkstückhalterung gegenüber der Schiene um das notwendige Maß verstellt. Man kann diese Verbindung anschließend wieder lösen und im Falle des Bleches die derart verstellte Werkstückhalterung, beispielsweise durch Verschieben des Schlittens, an anderer Stelle des Bleches wieder ansetzen.

Gemäß der zweiten Betriebsvariante bleibt der Stab oder das Blech nach dem Verbinden mit der Werkstückhalterung ortsfest und man verschiebet statt dessen den Schlitten in Längsrichtung des Stabes oder sinngemäß entlang dem Blech, wodurch man wiederum eine Relativverschiebung der Werkstückhalterung gegenüber dem Hubglied erzielt.

Eine Weiterbildung der Erfindung ist dadurch gekennzeichnet, daß die Werkstückhalterungen eine mit der Schiene zusammenwirkende Klemmvorrichtung aufweisen und der Stab ein Betätigungsglied für die Klemmvorrichtung aufweist, welches mit einer Ausnehmung der Klemmvorrichtung zusammenwirkt. Aufgrund der Klemmvorrichtung kann man eine leichtgängige Verschiebebewegung zwischen der Werkstückhalterung und der Schiene vorsehen. Über das Betätigungsglied des Stabes läßt sich diese Klemmvorrichtung lösen und nach der Relativverschiebung von Werkstückhalterung und Schiene kann man beispielsweise durch Zurückführung des Betätigungsglieds die Klemmwirkung der Klemmvorrichtung wieder herbeiführen.

Wenn man bei ortsfestem Stab oder Blech den Schlitten zusammen mit dem Hubglieb und der Schiene gegenüber dem oder den angehefteten Werkstückhalterungen verschiebt, so verbleiben selbstverständlich die nicht angehefteten Werkstückhalterungen in ihrer Relativlage gegenüber der Schiene. Dasselbe gilt natürlich auch, wenn die Schiene ortsfest gehalten und statt dessen der Stab oder das Blech verschoben wird. Im letzteren Falle erhält man darüber hinaus den entscheidenden Vorteil, daß man den Stab oder das Blech mit Hilfe der Vorschubeinrichtung der Bearbeitungsmaschine verschieben und somit programmgesteuert bewegen kann. Dieser Vorteil ist insbesondere dann besonders groß, wenn man nicht irgendein Blech verwendet, sondern bereits das als Werkstück vorgesehene Blech.

Die Erfindung bezieht sich des weiteren auf eine Vorrichtung zum Heben von Blechen, insbesondere zum Be- und Entladen einer einen Werkstückvorschub in wenigstens einer Koordinatenrichtung aufweisenden Bearbeitungsmaschine für das Blech, insbesondere eine Werkzeugmaschine, mit einem Hubglied mit mindestens einer Reihe von Werkstückhalterungen, vorzugsweise Saugern, wobei die Grundeinstellung der Werkstückhalterungen gegenüber dem Hubglied zumindest gruppenweise veränderbar ist und wobei ferner das Hubglied gegenüber einem Schlitten heb- und senkbar und der Schlitten gegenüber einem Gestell in mindestens eine waagrechte Verfahrrichtung verfahrbar ist.

Eine derartige Vorrichtung ist durch die DE-A-2 346 319 bekannt geworden. Mit ihrer Hilfe kann man große flache Werkstücke bzw. Blechtafeln von einem Stapel abnehmen und an eine andere Stelle transportieren, um sie dann dort abzusetzen. Dies ist bei einer unbearbeiteten Blechplatte hinsichtlich der Anordnung der Werkstückhalterungen am Blech problemlos. Wenn man aber nach einer Bearbeitung ein solches Werkstück mit vielen Durchbrüchen und dgl. wieder erfassen soll, so muß man durch Verstellen der einzelnen Werkstückhalterungsgruppen versuchen, möglichst viele Werkstückhalterungen auf der durchlöcherten Fläche aufsetzen zu können. Weil hierbei jede einzelne Gruppe oder Reihe separat verstellt bzw. eingestellt werden muß, ist das Ausrichten aller Werkstückhalterungen aufwendig und kompliziert. Dies gilt insbesondere, weil jede Zeile und Reihe einzeln einreguliert werden muß.

Es liegt deshalb des weiteren die Aufgabe vor, eine derartige Vorrichtung so weiterzubilden, daß mit ihr aufgrund einer einfacheren Ausbildung eine Verstellung der Werkstückhalterungen rasch und problemlos möglich ist.

Zur Lösung dieser Aufgabe wird erfindungsgemäß vorgeschlagen, daß die Vorrichtung gemäß dem Oberbegriff des Anspruchs 3 dadurch gekennzeichnet ist, daß alle Werkstückhalterungen senkrecht zu einer Verfahrrichtung des Hubglieds gemeinsam verstellbar sind, indem auf die auf einem Rahmen befestigten Werkstückhalterungen eine schräg zur besagten Verfahrrichtung des Hubglieds und auch zur Verstellrichtung der Werkstückhalterungen verlaufende, am Rahmen fest angeordnete Führungskurve einwirkt, die mit einer Führungsrolle an der zugeordneten hinteren Rahmenecke zusammen eine für alle Werkstückhalterungen gemeinsame Verstelleinrichtung bildet. Gerade letztere ermöglicht die angestrebte einfachere Ausbildung und auch problemlosere Verstellung. Sämtliche Werkstückhalterungen lassen sich über eine einzige Verstellbewegung gemeinsam verstellen, was im Vergleich zu der gruppenweise Verstellung der bekannten Vorrichtung nur einen Bruchteil der Zeit in Anspruch nimmt. Bei einem viele Durchbrüche und dgl. aufweisenden Werkstück lassen sich selbstverständlich nicht alle Werkstückhalterungen über eine das Ansetzen ermöglichenden Teilfläche des Werkstücks plazieren, jedoch ist das auch gar nicht notwendig. Je mehr Durchbrüche und dgl. ein Werkstück aufweist, umso leichter ist es und umso weniger Werkstückhalterungen sind zu seinem Anheben notwendig. Aus diesem Grunde kann man die einzige Verstellbewegung so wählen, daß eine möglichst große Anzahl von Werkstückhalterungen für das Hochheben dieses Werkstücks ausgerichtet werden können.

Eine weitere Ausgestaltung der Erfindung kennzeichnet sich dadurch, daß das Hubglied mit einer der Maximalgröße eines anhebbaren Werkstücks etwa zweckmäßiger Vielzahl von Werkstückhalterungen in Reihenanordnungen versehen ist. Dabei ist es dann besonders vorteilhaft, daß die Werkstückhalterungen einzeln aktivierbar sind, so daß man beispielsweise beim Hochheben eines mit Durchbrüchen versehenen Werkstücks nur diejenige aktiviert, die auch tatsächlich am Hochheben des Werkstücks beteiligt sind.

Die Zeichnung zeigt je ein Ausführungsbeispiel der Erfindung. Hierbei stellen dar :

Fig. 1 schematisch eine Seitenansicht der ersten Ausführungsform einer Hebevorrichtung,

Fig. 2 wiederum schematisch und teilweise abgebrochen eine Draufsicht auf die zweite Ausführungsform der Erfindung, teilweise in horizontaler Richtung geschnitten.

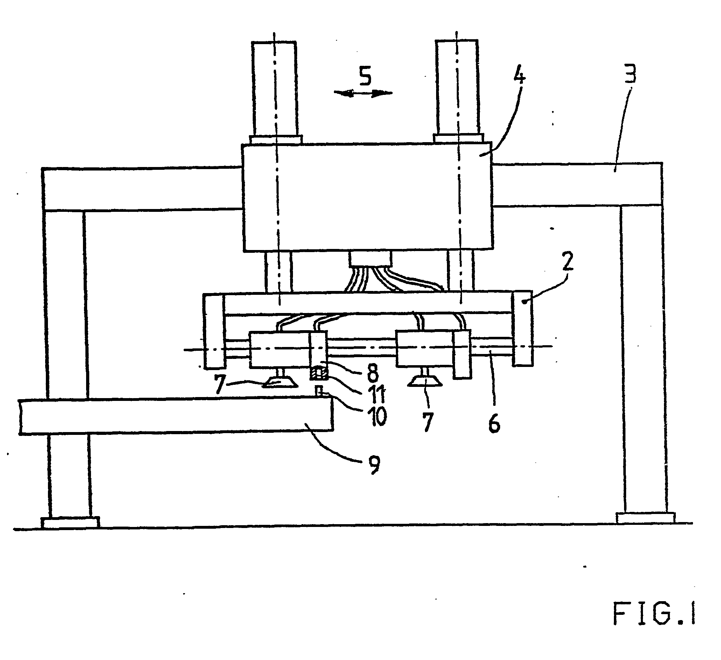

Bei der Ausführungsform nach Fig. 1 ist das Hubglied 2 an einem auf dem Gestell 3 längsverschiebbar in Richtung des Pfeiles 5 gelagerten Schlitten 4 angeordnet. Unterhalb des Hubgliedes 2 befindet sich eine in Verschieberichtung 5 liegende Schiene 6, auf der verschiebbar als Sauger ausgebildete Werkstückhalterungen 7 gelagert sind. Diese Werkstückhalterungen sind noch zusätzlich mit einer Klemmvorrichtung 8 versehen, welche mit der Schiene 6 zusammenwirkt. In die Vorrichtung ragt ein Stab 9 hinein, der mit dem Koordinatenantrieb einer nicht dargestellten Bearbeitungsmaschine verbunden ist und an seinem freien Ende ein nach oben gerichtetes Betätigungsglied 10 aufweist. Wenn nunmehr das Hubglied 2 nach unten bewegt wird, greift das Betätigungsglied 10 in eine Ausnehmung 11 der Klemmvorrichtung ein, löst diese und verschiebt dann die mit der Klemmvorrichtung 8 verbundene, als Sauger ausgebildete Werkstückhalterung 7 in die gewünschte Lage. Anschließend bewegt sich das Hubglied 2 nach oben, so daß das Betätigungsglied 10 aus der Ausnehmung 11 austritt und wiederum ein Anklemmen in der nunmehr geänderten Lage erfolgt.

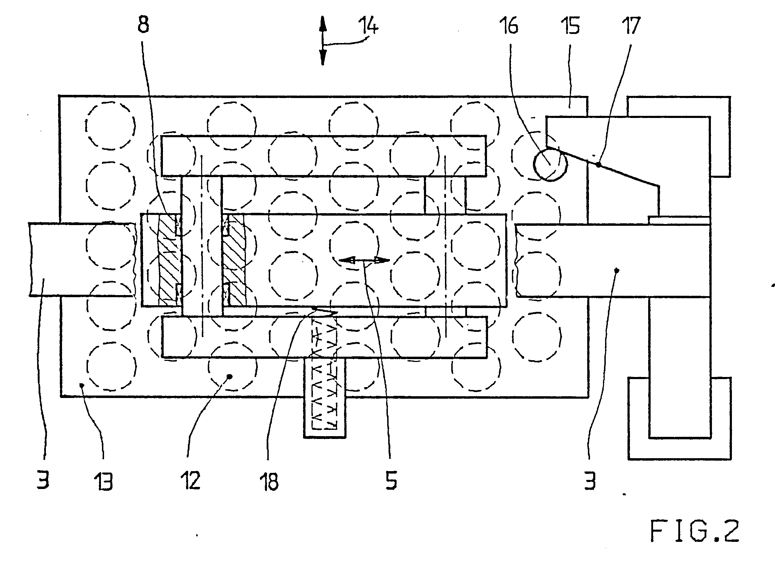

Beim Ausführungsbeispiel nach Fig. 2 sind die als Sauger 12 ausgebildeten Werkstückhalterungen an einem Rahmen 13 befestigt, welcher seinerseits in Richtung des Pfeils 14 gegenüber dem nicht dargestellten Hubglied 2 verschiebbar ist. An der hinteren Rahmenecke 15 ist eine Führungsrolle 16 angebracht, die mit einer quer zur Verschieberichtung 5 fest am Rahmen 3 angeordneten Führungskurve 17 zusammenarbeitet. In der gezeichneten Stellung befindet sich der Rahmen 13 in seiner normalen Endstellung, in welcher sich die Querlage des Rahmens 13 nicht verändert. Wird der Rahmen 13 dagegen in der Zeichenebene nach rechts weiterbewegt, dann erfolgt an der Führungskurve 17 zwangsläufig eine Querverschiebung bis in die gewünschte Lage. Diese Querverschiebung kann gegenüber einer Federkraft 18 erfolgen wobei dann natürlich wiederum Klemmvorrichtungen 8 vorgesehen sein müssen, welche den Rahmen 13 bei der Bewegung zur Bearbeitungsmaschine in seiner entsprechenden Lage halten.

**Patentansprüche**

1. Vorrichtung zum Heben von Blechen, insbesondere zum Be- und Entladen einer einen Werkstückvorschub in wenigstens einer Koordinatenrichtung aufweisenden Bearbeitungsmaschine für das Blech, insbesondere Werkzeugmaschine, mit einem Hubglied (2) mit mindestens einer Reihe von Werkstückhalterungen (7), vorzugsweise Saugern, wobei die Grundeinstellung der Werkstückhalterungen gegenüber dem Hubglied (2) einzeln veränderbar ist, indem die Werkstückhalterungen (7) an zumindest einer Schiene (6) längsverschiebbar gelagert sind und wobei ferner das Hubglied (2) gegenüber einem Schlitten (4) heb- und senkbar und der Schlitten gegenüber einem Gestell (3) in Verstellrichtung der Werkstückhalterungen (7) verfahrbar ist, dadurch gekennzeichnet, daß die Werkstückhalterungen (7) zur Veränderung ihrer Grundeinstellung mit einem in Richtung der Schiene bewegbaren Stab (9) oder Blech verbindbar sind, wobei der Stab (9) oder das Blech mit der oder den Werkstückhalterungen (7) gegenüber der Schiene (6) oder der Schlitten (4) gegenüber dem Stab oder Blech mit der oder den Werkstückhalterungen verschiebbar ist.

2. Vorrichtung nach Anspruch 1, dadurch gekennzeichnet, daß die Werkstückhalterungen (7) eine mit der Schiene (6) zusammenwirkende Klemmvorrichtung (8) aufweisen und der Stab (9) ein Betätigungsglied (10) für die Klemmvorrichtung (8) aufweist, welches mit einer Ausnehmung (11) der Klemmvorrichtung (8) zusammenwirkt.

3. Vorrichtung zum Heben von Blechen, insbesondere zum Be- und Entladen einer einen Werkstückvorschub in wenigstens einer Koordinatenrichtung aufweisenden Bearbeitungsmaschine für das Blech, insbesondere Werkzeugmaschine, mit einem Hubglied (2) mit mindestens einer Reihe von Werkstückhalterungen (12), vorzugsweise Saugern, wobei die Grundeinstellung der Werkstückhalterungen gegenüber dem Hubglied (2) zumindest gruppenweise veränderbar ist, und wobei ferner das Hubglied (2) gegenüber einem Schlitten (4) heb- und senkbar und der Schlitten gegenüber einem Gestell (3) in mindestens eine waagrechte Verfahrrichtung (5) verfahrbar ist, dadurch gekennzeichnet, daß alle Werkstückhalterungen (12) senkrecht (14) zu einer Verfahrrichtung (5) des Hubglieds (2) gemeinsam verstellbar sind, indem auf die an einem Rahmen (13) befestigten Werkstückhalterungen (12) eine schräg zur besagten Verfahrrichtung (5) des Hubglieds (2) und auch zur Verstellrichtung der Werkstückhalterungen (12) verlaufende, am Rahmen (3) fest angeordnete Führungskurve (17) einwirkt, die mit einer Führungsrolle (16) an der zugeordneten hinteren Rahmenecke (15) zusammen eine für alle Werkstückhalterungen (12) gemeinsame Verstelleinrichtung bildet.

4. Vorrichtung nach wenigstens einem der vorhergehenden Ansprüche, dadurch gekennzeichnet, daß das Hubglied (2) mit einer der Maximalgröße eines anhebbaren Werkstücks etwa zweckmäßiger Vielzahl von Werkstückhalterungen (7, 12) in Reihenanordnung versehen ist.

5. Vorrichtung nach Anspruch 4, dadurch gekennzeichnet, daß die Werkstückhalterungen (7, 12) einzeln aktivierbar sind.

**Claims**

1. Apparatus for lifting plates, particularly for loading and unloading a machine for working the metal plate and comprising a workpiece feed in at least one coordinate direction, particularly a machine tool, with a lifting member (2) having at least one series of workpiece supports (7), preferably suction means, the basic position of the workpiece supports being variable individually in relation to the lifting member (2), in that the workpiece supports (7) are mounted for longitudinal displacement on at least one rail (6), the lifting member (2) being mounted for upwards and downwards movement in respect of a slide (4), the slide being adapted for movement in respect of a frame (3) in the direction of adjustment of the workpiece supports (7), characterised in that the workpiece supports (7), for variation of their basic position, being adapted for connection to a bar (9) or metal plate adapted for movement in the direction of the rail, the bar (9) or the metal plate being displaceable with the workpiece support or supports (7) in relation to the rail (6) or the slide (4) and in respect of the bar or plate with the workpiece support or supports.

2. Apparatus according to Claim 1, characterised in that the workpiece supports (7) comprise a clamping device (8) cooperating with the rail (6), the bar (9) comprising an actuating member (10) for the clamping device (8) and cooperating with a recess (11) in the clamping device (8).

3. Apparatus for lifting metal plates, particularly for the loading and unloading of a machine for working the metal plate and having a workpiece feed in at least one coordinate direction, particularly a machine tool, with a lifting member (2) having at least one series of workpiece supports (12), preferably suction devices, the basic setting of the workpiece supports in respect of the lifting member (2) being variable at least in groups and, furthermore, the lifting member (2) is adapted to be raised and lowered in relation to a slide (4), the slide being adapted for movement in respect of a frame (3) in at least a horizontal direction (5), characterised in that all workpiece supports (12) are adapted for joint displacement at right angles (14) to a direction (5) of the lifting member (2) in that there is acting on the workpiece supports (12) mounted on a frame (13) and disposed rigidly and obliquely to the said direction of movement (5) of the lifting member (2) and also in respect of the direction of displacement of the workpiece supports (12), on the frame (3), there is a rigidly disposed guide cam (17) which, together with a guide roller (16) on the associated rear corner (15) of the frame, constitutes an adjusting means which is common to all the workpiece supports (12) preferably.

4. Apparatus according to at least one of the preceding Claims, characterised in that the lifting member (2) is provided in series with a plurality of workpiece supports (7, 12) which is expedient substantially with the maximum size of a workpiece which can be raised.

5. Apparatus according to Claim 4, characterised in that the workpiece supports (7, 12) can be activated individually.

**Revendications**

1. Dispositif pour le levage de tôles, en particulier pour charger et décharger une machine d'usinage de la tôle comportant une avance des pièces selon au moins un axe de coordonnées, en particulier une machine-outil, comprenant un organe de levage (2) avec au moins une rangée de supports de pièces (7), de préférence de ventouses, le réglage de base des supports de pièces par rapport à l'organe de levage (2) pouvant être modifié individuellement, tandis que les supports de pièces (7) sont montés sur au moins un rail (6) de façon à pouvoir être déplacés longitudinalement, l'organe de levage (2) pouvant en outre être élevé et abaissé par rapport à un chariot (4), et ce chariot pouvant être déplacé par rapport à un bâti (3) dans la direction de déplacement des supports de pièces (7), caractérisé par le fait que les supports de pièces (7), pour modifier leur réglage de base, peuvent être reliés à une barre (9) ou à une tôle qui peut être déplacée dans la direction du rail, la barre (9) ou la tôle pouvant être déplacée avec le ou les supports de pièces (7) par rapport au rail (6), ou le chariot (4) pouvant être déplacé par rapport à la barre ou à la tôle avec le ou les supports de pièces.

2. Dispositif selon la revendication 1, caractérisé par le fait que les supports de pièces (7) comportent un dispositif de serrage (8) coopérant avec le rail (6), et que la barre (9) comporte un organe d'actionnement (10) pour le dispositif de serrage (8), lequel coopère avec un évidement (11) du dispositif de serrage (8).

3. Dispositif pour le levage de tôles, en particulier pour charger et décharger une machine d'usinage de la tôle comportant une avance des pièces selon au moins un axe de coordonnées, en particulier une machine-outil, comprenant un organe de levage (2) avec au moins une rangée de supports de pièces (12), de préférence de ventouses, le réglage de base des supports de pièces par rapport à l'organe de levage (2) pouvant être modifié au moins par groupes, l'organe de levage (2) pouvant en outre être élevé et abaissé par rapport à un chariot (4), et ce chariot pouvant être déplacé par rapport à un bâti (3) dans au moins une direction de déplacement horizontale (5), caractérisé par le fait que tous les supports de pièces (12) peuvent être déplacés ensemble perpendiculairement (14) à une direction de déplacement (5) de l'organe de levage (2), tandis qu'agit sur les supports de pièces (12) fixés à un cadre (13) une came de guidage (17) qui est montée fixe sur le cadre (3), qui s'étend obliquement par rapport à ladite direction de déplacement (5) de l'organe de levage (2), et aussi par rapport à la direction de déplacement des supports de pièces (12), et qui, avec un galet de guidage (16) monté sur le coin arrière (15) correspondant du cadre, constitue un dispositif de déplacement commun à tous les supports de pièces (12).

4. Dispositif selon l'une au moins des revendications précédentes, caractérisé par le fait que l'organe de levage (2) est muni d'un nombre de supports de pièces (7, 12) disposés en rangées qui est sensiblement approprié à la dimension maximale d'une pièce à soulever.

5. Dispositif selon la revendication 4, caractérisé par le fait que les supports de pièces (7, 12) peuvent être activés individuellement.

FIG.1

FIG.2